# EUROPEAN PATENT SPECIFICATION

(11) **EP 0 974 482 B1**
(45) Date of publication and mention of the grant of the patent: **13.08.2003**
(21) Application number: 99112348.0
(22) Date of filing: 28.06.1999
(51) Int. Cl.: B60K 31/04

(54) **Variable speed controller for motor vehicles with electronic ignition**
Verstellbare Geschwindigkeitssteuerung für Kraftfahrzeuge mit elektronischem Zündsystem
Commande variable de la vitesse pour véhicules automobiles avec allumage électronique

(30) Priority: 24.07.1998 IT GE980065
(43) Date of publication of application: 26.01.2000
(73) Proprietor: C.R.C. BETTELLA di Bettella Giovanni & C. S.n.c., 35010 Limena (PD) (IT)
(72) Inventor: Pinasco, Andrea, 16136 Genova (IT)
(74) Representative: Ferrarotti, Giovanni, Dr.Ing.

(56) References cited:
- EP-A- 0 754 587
- DE-A- 4 431 070
- US-A- 4 648 366
- US-A- 5 138 996

## Description

Nowadays motor vehicles and motor bicycles are ever more frequently used, especially for moving in town, because they can be easily parked.

Unfortunately, however, an excessive self-confidence, especially of young drivers and high speed often cause car accidents that could have been avoided if the drivers had been a little more careful.

Speed controllers for electronic ignition are already on the market and these devices may be directly installed on new vehicles by the manufacturers or on circulating vehicles by specialized garages.

These known speed controllers have, however, a few drawbacks, the most important of which lies in the fact that they are not adjustable so that they can only be connected or disconnected to obtain the maximum speed or a speed value set by the controller but which setting cannot be modified.

Furthermore, this speed controller which is programmed for a preset maximum speed for a given vehicle type cannot be used on any other vehicle types having a different power rating so that each car-maker has to manufacture its own speed controller, while specialized garages have difficulty in providing the various motorcycles and motor-bicylces now in circulation with an appropriate speed controller.

Another drawback of these known devices lies in the fact that they may be connected and disconnected by anybody, so that even very young drivers may drive at maximum speed by cutting-out the speed controller previously turned ON by their parents or by the owner of the vehicle.

A variable speed controller according to the preamble of claim 1 is known from the document EP-A-0 754 587.

This invention has the aim to eliminate the above drawbacks. Thus, the speed controller subject matter of this invention is adjustable so that it can be installed on series built motor vehicles manufactured by different car-makers and having differentiated power ratings. This will permit standardization of the speed controller range, to be limited to one or a few low cost series- built devices, to be installed on various motor vehicle types, so that the car-makers will no longer need to produce their own speed controller which are now expensive because of their small scale production and difficult to find for specialized garage owners.

Furthermore, the speed controller subject matter of this invention, is sealed off and is mounted inside the bearing body of the vehicle so that it cannot be adjusted by just any person thus preventing the speed range to be tampered with. Control i.e. connection or disconnection of the speed controller is preferably by remote control which normally permits to cut-out the speed controller since it is cut-in automatically each time the motor is stopped and/or started. It follows that if the driver wants to move at maximum speed, he will have to take his remote control device with him to reset the maximum speed value after each stopping of the motor, whereas drivers who want to move at limited speed, e.g. very young or inexperienced drivers, will be unable to exceed the preset limit speed since they do not possess a remote control device.

Obviously, control and speed of the vehicle may be adjusted not only by remote control but also by hand but then, the risk remains that the speed controller may be disconnected unless a manual control switch fitted with an isolating key is installed, which keys obviously are kept by the car owner.

Concisely, the speed controller subject matter of this invention consists of a selector switch to select a set of capacitors activated on the basis of a control corresponding to the maximum desired reduced engine cruising speed

This selector switch and the related capacitors are built into a central unit located between the ignition pulse pick-up on the periphery of the flywheel magneto which in turn is connected to the spark plug.

Thus, before reaching the ignition trigger box, the signal issued by the pick-up is filtered by one or more capacitors having different power ratings according to their setting on the controller by preferably remote control devices or by hand. The controller for regulation of the reduced maximum speed installed in the central unit permits to adjust the device to almost all motor vehicles equipped with electronic ignition. In addition, the controller also allows to select the desired limitation level, thus establishing the reduced maximum speed that can be reached with the vehicle when the device is connected and this reduced maximum speed may be a percentage (e.g. 50% - 60%) of the absolute maximum speed of the vehicle. Thus connected, the controller permanently limits the speed of the vehicle at the pre-set level. A manual control with key-lock or preferably a remote controlled transmittor is provided, actuating the switch so that the speed controller will be disconnected by by-passing the central unit.

Each time the motor is stopped and/or started, the speed controller is automatically connected thus limiting the speed.

The invention in question is illustrated in the enclosed drawing in which:

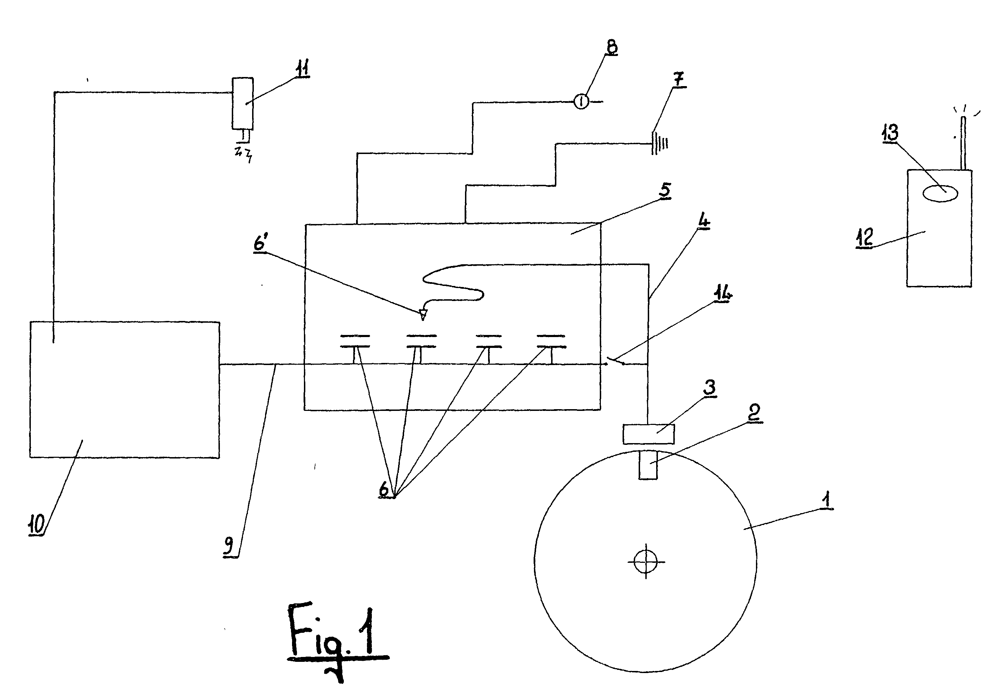

**Fig.1** shows the functional diagram of the device subject matter of this invention.

With reference to this figure, 1 refers to the flywheel magneto secured to the driving shaft of the vehicle.

The flywheel 1 features, in a given position on its periphery, a rotating insert 2 encountering on its trajectory a pick-up 3 designed to receive the pulse issued by the insert 2.

A cable 4 transmitting the signal issued by the pick-up 3 is connected to the latter. This cable 4 reaches the central unit 5 housing a set of capacitors 6 having differentiated power ratings and also lodging a selector switch 6' to select the capacitor(s) filtering the output signal of the pick-up 3 thus generating the desired speed limit. From this central unit 5 are also leading out the earthing cable 7, the power supply cable 8 of the system when the starter key is in "on" position and the cable 9 transmitting the signal from the central unit 5 to the ignition trigger box 10 which in turn transmits the high voltage spark to the spark plug 11.

Each capacitor 6 is set and adjusted for a given charging time and hence for a given powering frequence of the ignition trigger box 10 and of the spark plug 11.

Thus, each capacitor is set for a specific time lag of the output signal from the pick-up 3 to the ignition trigger box 10.

This time lag tallies with a reduced maximum vehicle speed which cannot be exceeded.

These differently rated capacitors 6 to be selected by means of the selector switch 6' thus make it possible, in the practice, to limit the output pulse frequency of the pick-up 3 and hence the performance of the motor.

This means in practice that at each turn of the flywheel 1, the insert 2 located in a given position on the flywheel periphery will meet the pick-up 3. The latter, in turn, activated by the insert 2, will issue a signal also called "acknowledgement signal" which is transmitted by the cable 4 to the capacitor(s) 6 selected by the switch 6' which is part of the device.

This capacitor 6 will limit the output pulse frequency of the pick-up 3 to the desired level and will therefore also limit the performance of the motor.

The selector switch 6' for adjustment of the maximum speed located in the central unit 5 permits to adjust the device to almost all motor vehicle types provided with electronic ignition. This switch also permits to select the desired limitation level and thus to fix the reduced maximum speed of the vehicle when the device is turned "ON". Thus connected, the device will permanently limit the driving speed at the preset level. A remote controlled transmitter 12 by which the speed controller is cut out, will permit to reset the original performance ratings of the vehicle by simply pressing the push-button 13 which will close the switch 14 for direct communication between the pick-up 3 and the ignition trigger box 10, by by-passing the control unit 5.

The device is automatically connected each time the motor is stopped and/or started by turning the switch 14 OFF.

The switch 6' and the speed limit selection may be actuated by the remote control 12 if available for this function or else by manual control possibly fitted with an isolating key.

The speed controller subject matter of this invention is easy to manufacture and to install at a limited cost, it may also be produced in one or a few standard types to be installed on various motor vehicle models without need for expensive adjustment and specialized garages need no longer go hunting for controllers manufactured by specific car-makers.

## Claims

1. Variable speed controller for motor vehicles with electronic ignition which includes:
- an insert (2) located in a given pheripherical position on the flywheel magneto (1) secured to the driving shaft of the vehicle,
- a pick-up (3) suitably positioned with respect to the rotation trajectory of the insert (2),
- an ignition trigger box (10) which transmits the high voltage spark to the spark plug (11) igniting the mixture,
- a cable (4) to transmit the output signal from the pick-up (3) to the ignition trigger box (10),
**characterized in that** a central unit (5) lodging a set of differently rated capacitors (6) and a selector switch (6') to select the capacitor(s) filtering the output signal of the pick-up (3) and generating the desired speed limit, is located between the pick-up (3) and the ignition trigger box (10) and **in that** the preselected limit is permanent and may be adjusted or may be cut-out by by-passing the central unit (5) thus closing a by-pass switch (14) between the pick-up (3) and the ignition trigger box (10), by means of a control (12), and **in that** this speed controller with and can only be disconnected by the owner of the control device (12).

2. Speed controller as described in claim 1, **characterized in that** the selection of the speed limitation level and/or disconnection of the speed controller may be by remote control (12) or by manual control possibly fitted with an isolating switch.

3. Speed controller as described in claim 1, **characterized in that** the preselected maximum speed limit is permanent and is cut-in each time the motor is started or stopped, automatically turning OFF the by-pass switch (14) between the pick-up (3) and the ignition trigger box (10).

4. Speed controller as described in claim 1, **characterized in that** the above mentioned controller will fix the maximum reduced speed that can be reached by the vehicle when the device is connected, for example this speed may be a percentage, e.g. 50%-60% of the absolute maximum speed of the vehicle when the controller is cut-out.

## Patentansprüche

1. Veränderlicher Geschwindigkeitsregler für Motorfahrzeuge mit elektronischer Zündung, wobei der besagte Motor enthält:
- einen Einsatz (2) , der in einer gegebenen peripherischen Stellung am Schwungradmagneten (1) angebracht ist, der an der Welle des Motors des Fahrzeugs befestigt ist,
- einen Pick-up (3), in geeigneter passender Stellung zur Drehbahn des Einsatzes (2) angebracht,
- ein Zündgehäuse (10), das die Hochvoltfunkenentladung zur Zündkerze (11) überträgt und das Gemisch entzündet,
- ein Kabel (4), das das Signal vom Pick-up (3) zum Zündgehäuse (10) überträgt,
**gekennzeichnet dadurch, dass** eine zentrale Einheit (5), in der ein Satz von Kondensatoren mit verschiedener Nennleistung und ein Umschalter (6') untergebracht sind, um den Kondensatoren oder die Kondensatoren (6) zu wählen, die das Output-Signal vom Pick-up (3) filtern und die gewünschte Geschwindigkeitsberenzung erzeugen, dass diese Einheit zwischen dem Pick-up (3) und dem Zündgehäuse (10) untergebracht ist und dadurch, dass die vorgewählte Begrenzung ständig ist und durch Umgehung der Zentralen Einheit (5) reguliert oder ausgeschlatet werden kann durch Schließen eines Umgehungsschalters (14) zwischen dem Pick-up (3) und dem Zündgehäuse (10) durch eine Fernbedienung (12), und dadurch, dass dieser Geschwindigkeitsregler nur durch den Eigentümer der Fernbedinung (12) ausgeschlatet werden kann.

2. Geschwindigkeitsregler wie in Anspruch 1 beschrieben, **gekennzeichnet dadurch, dass** die Wahl des Geschwindigkeitsbegrenzungsniveaus und/oder die Ausschlatung des Geschwindigkeitsreglers durch Fernbedienung (12) oder durch Handkontrolle erfolgen kann, die möglicherweise mit einem isolierenden Schalter versehen ist.

3. Geschwindigkeitsregler wie in Anspruch 1 beschrieben, **gekennzeichnet dadurch, dass** die vorgewählte Höchstgeschwindigkeitsgrenze ständig ist und jedesmal eingeschlatet ist, wenn der Motor an- oder ausgeschlatet wird, wobei der Umgehungsschalter (14) zwischen dem Pick-up (3) und dem Zündgehäuse (10) automatisch ausgeschaltet wird.

4. Geschwindigkeitsregler wie in Anspruch 1 beschrieben, **gekennzeichnet dadurch, dass** der oben beschriebene Regler die höchstherabgesetzte Geschwindigkeit festsetzt, die das Fahrzeug bei eingeschalteter Vorrichtung imstande ist zu erreichen, zum Beispiel kann diese Geschwindigkeit ein Prozentsatz von 50%-60% von der absoluten Höchstgeschwindigkeit des Fahrzeugs sein, wenn der Regler ausgeschaltet ist.

## Revendications

1. Régulateur de vitesse variable pour véhicules avec allumage électronique, comprenant:
- une pièce rapportée (2) située en position périphérique sur le générateur à volant (1) fixé à l'arbre moteur du véhicule;
- un capteur (3) en position appropriée par rapport au trajectoire de la pièce rapportée (2);
- Une boîte de déclenchement d'allumage (10) pour transmettre l'étincelle à haute tension à la bougie (11) pour allumer le mélange;
- un câble (4) de transmission du signal en sortie du capteur (3) à la boîte de déclenchement (10), **caractérisé par le fait qu'**une unité centrale (5) dans laquelle est montée une série de condensateurs (6) à puissance différentiée .et un sélecteur de commutation (6') pour sélectionner le(s) condensateur(s) filtrant le signal en sortie du capteur (3) pour générer la lime de vitesse voulue, est située entre le capteur (3) et la boîte de déclenchement d'allumage (10) et que la limite sélectionnée est permanente et pourra être ajustée ou sectionnée par shuntage de l'unité centrale moyennant un interrupteur de shuntage. (14) situé entre le capteur (3) et la boîte d'enclenchement d'allumage (10) moyennant une commande (12) et **par le fait que** ce régulateur de vitesse peut être déconnecté seulement par le propriétaire du dispositif de commande (12).

2. Régulateur de vitesse comme décrit dans la revendication 1, **caractérisé par le fait que** la sélection du niveau de la limitation de vitesse et/ou la déconnexion du régulateur de vitesse pourra être obtenu par télécommande (12) ou par commande à main, éventuellement muni d'une clef de séparation.

3. Régulateur de vitesse comme décrit dans la revendication 1, **caractérisé par le fait que** la limite maximale de vitesse sélectionnée est permanente et qu'elle est connectée automatiquement à chaque arrêt ou démarrage du moteur, mettant l'interrupteur de shuntage (14) entre le capteur (3) et la boîte d'enclenchement d'allumage (10) en position de coupure.

4. Régulateur de vitesse comme décrit dans la revendication 1, **caractérisé par le fait que** le régulateur susmentionné fixera la vitesse réduite maximale qui pourra être atteinte par le véhicule quand le dispositif est connecté, par exemple en pourcentage de 50% ou 60% de la vitesse absolue du véhicule lorsque le dispositif est sectionné.
